(19) **Europäisches Patentamt / European Patent Office / Office européen des brevets**

(11) **EP 1 298 782 B1**

(12) **EUROPEAN PATENT SPECIFICATION**

(45) Date of publication and mention
of the grant of the patent:
**02.08.2017 Bulletin 2017/31**

(51) Int Cl.:
*H02M 1/42* (2007.01)     *H02M 5/458* (2006.01)
*H02M 1/12* (2006.01)

(21) Application number: **02021315.3**

(22) Date of filing: **20.09.2002**

(54) **Inverter air-conditioner**

Wechselrichteranordnung für eine Klimaanlage

Onduleur pour installation d'air conditionné

(84) Designated Contracting States:
**ES GR IT**

(30) Priority: **28.09.2001 JP 2001300592**

(43) Date of publication of application:
**02.04.2003 Bulletin 2003/14**

(73) Proprietor: **Panasonic Corporation
Kadoma-shi
Osaka 571-8501 (JP)**

(72) Inventors:
- **Ninomiya, Yasuhisa
Kusatsu-shi,
Shiga 525-0054 (JP)**
- **Harada, Kazuhiro
Itami-shi,
Hyogo 664-0881 (JP)**
- **Maeda, Shiro
Otsu-shi,
Shiga 520-2101 (JP)**
- **Baba, Toshinari
Otsu-shi,
Shiga 520-2101 (JP)**
- **Goto, Eiji
Otsu-shi,
Shiga 520-0867 (JP)**
- **Sugimoto, Tomohiro
Kusatsu-shi,
Shiga 525-0057 (JP)**

(74) Representative: **Holmes, Miles Keeton et al
Novagraaf International SA
Chemin de l'Echo 3
1213 Onex (CH)**

(56) References cited:
EP-A- 1 022 844     DE-A1- 19 920 973
JP-A- 2001 204 173     JP-A- 2001 211 650
JP-A- 2001 224 178     US-A- 5 915 070
US-A- 6 137 700

- PATENT ABSTRACTS OF JAPAN vol. 2000, no. 25, 12 April 2001 (2001-04-12) -& JP 2001 211652 A (MATSUSHITA REFRIG CO LTD), 3 August 2001 (2001-08-03)
- PATENT ABSTRACTS OF JAPAN vol. 2000, no. 13, 5 February 2001 (2001-02-05) -& JP 2000 295855 A (MATSUSHITA REFRIG CO LTD), 20 October 2000 (2000-10-20)

**Description**

Field of the Invention

The present invention relates to an inverter air-conditioner equipped with a converter that adopts a rectifying method using a bridge rectifying circuit.

Background of the Invention

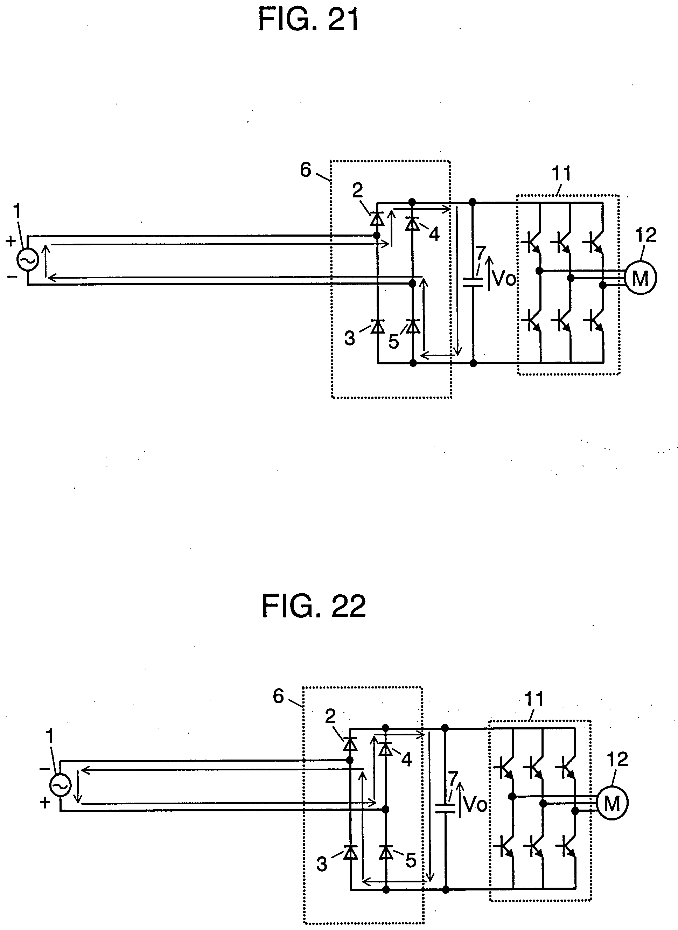

Inverter air-conditioners equipped with a diode-based rectifying circuit as a converter have been well known in the market. Fig. 21 and Fig. 22 show a circuit of an inverter air-conditioner equipped with a full-wave rectifying circuit using a bridge rectifying circuit. The circuit of the inverter air-conditioner comprises (a) ac power supply 1, (b) full-wave rectifying circuit 6, (c) smoothing capacitor 7, (d) inverter section 11, and (e) compressor 12. The full-wave rectifying circuit shown in Figs. 21 and 22 is bridge rectifying circuit 6 formed of four diodes 2-5.

Fig. 21 shows a flow of an ac current from ac power supply 1 during a positive half cycle. The current flows, as shown with the arrow mark, through diode 2, smoothing capacitor 7, and diode 5 in this order, thereby producing positive voltage Vo across smoothing capacitor 7.

Fig. 22 shows a flow of an ac current of ac power supply 1 during a negative half cycle. The current flows, as shown with the arrow mark, through diode 4, smoothing capacitor 7, and diode 3 in this order, thereby producing positive voltage Vo across smoothing capacitor 7.

In other words, an ac voltage supplied from ac power supply 1 is rectified full-wave, and a positive dc voltage is produced.

Fig. 23 shows relations between a dc output voltage from the inverter air-conditioner shown in Figs. 21, 22, a number of rotations (rpm) of compressor 12 and a conduction ratio into inverter section 11 by a pulse width control method (PWM). The dc output voltage is a fixed value determined by an ac voltage and a load, thus the number of rotations (rpm) of compressor 12 can be controlled by varying the conduction ratio into inverter section 11. The upper limit of the conduction ratio to inverter section 11 shows the max. rpm of compressor 12.

However, in an inverter air-conditioner equipped with the foregoing conventional converter, an input current flows only during a period while a voltage of ac power supply 1 stays higher than the dc output voltage. Therefore, an input power factor stays low, harmonic current from the power supply becomes greater, and the dc output voltage lowers as the load increases. As a result, the max. rpm of compressor 12 does not increase.

A usual preventive method against the harmonic current is to connect a reactor between ac power supply 1 and bridge rectifying circuit 6. Although this method can suppress a harmonic component, it gains an input power factor of only approx. 70%. This method thus puts a burden on the power supply system.

An improving method for increasing the dc output voltage is to mount a booster converter of high frequency switching. This method, however, involves increasing a cost due to using elements for high-frequency switching as well as increasing noises from the high-frequency switching.

A further inverter air-conditioner is disclosed in JP2001204173.

**Summary of the Invention**

The invention provides an inverter air-conditioner according to claim 1. Preferred embodiments are defined in the dependent claim.

Brief Description of the Drawings

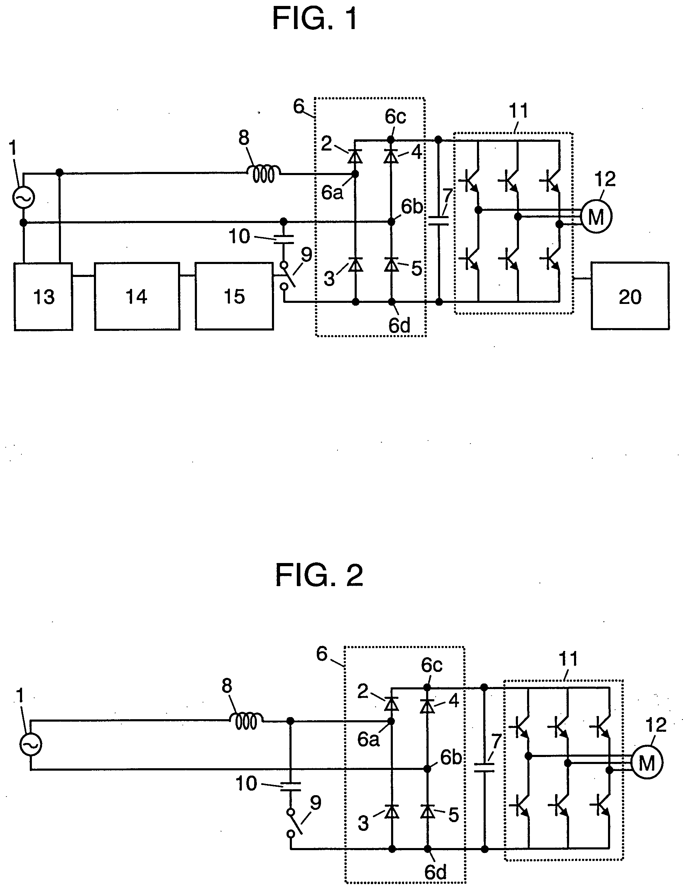

Fig. 1 shows a structure of an inverter air-conditioner in accordance with a first exemplary embodiment of the present invention.
Fig. 2 shows a structure of an inverter air-conditioner in accordance with the first exemplary embodiment of the present invention.

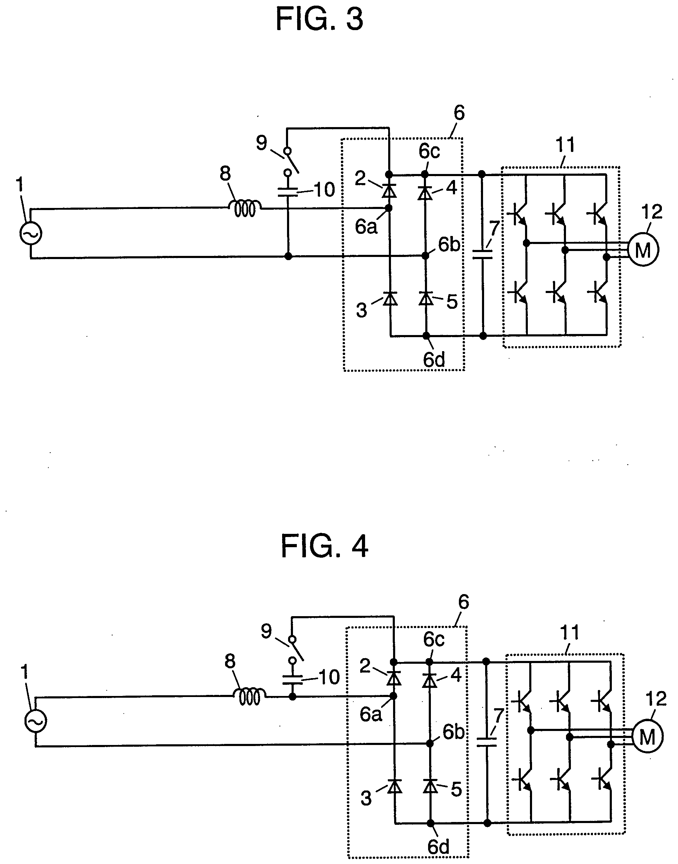

Fig. 3 shows a structure of an inverter air-conditioner in accordance with the first exemplary embodiment of the present invention.
Fig. 4 shows a structure of an inverter air-conditioner in accordance with the first exemplary embodiment of the present invention.

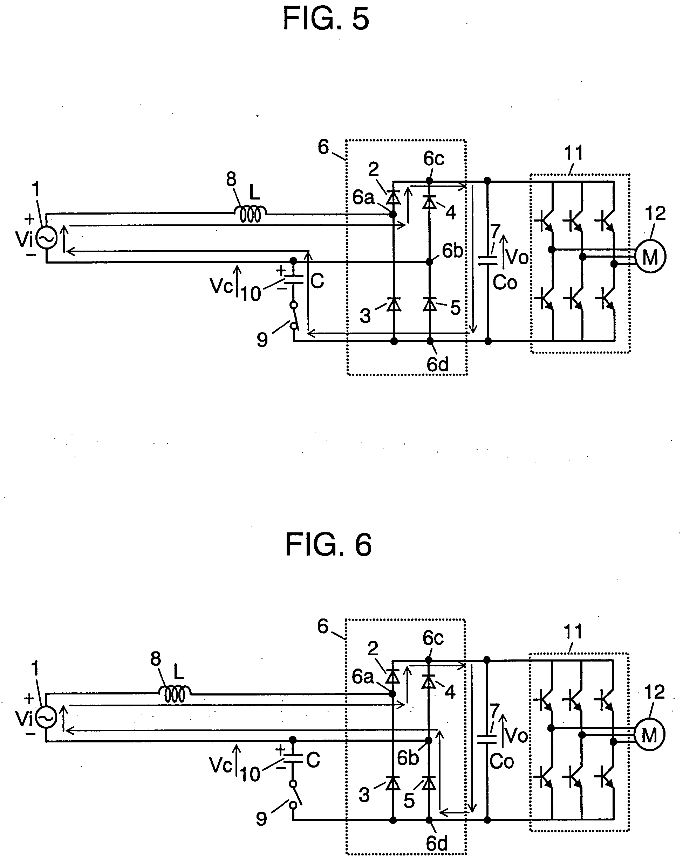

Fig. 5 illustrates an operation of a converter of the inverter air-conditioner in accordance with the first exemplary embodiment of the present invention.

Fig. 6 illustrates an operation of a converter of the inverter air-conditioner.

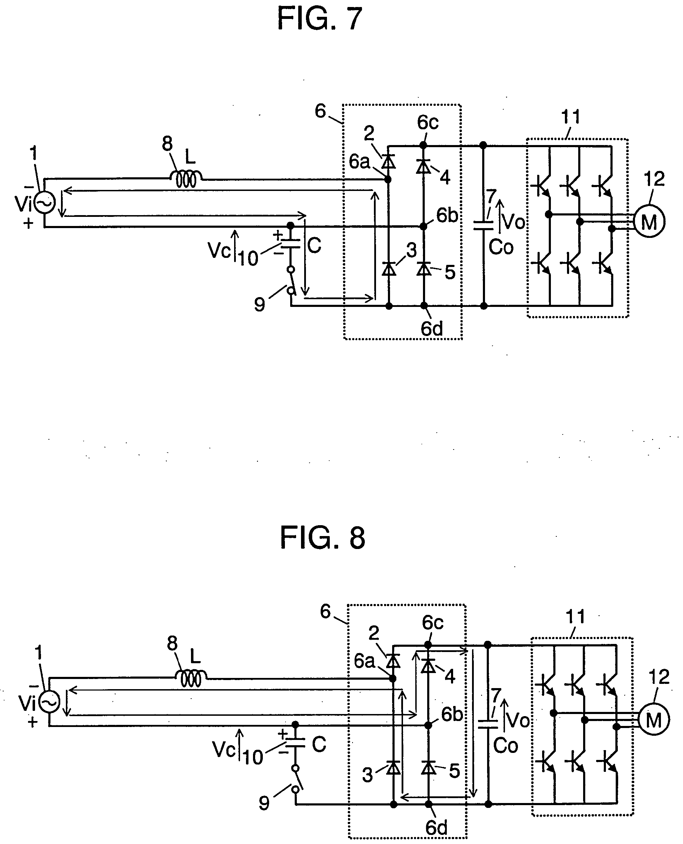

Fig. 7 illustrates an operation of a converter of the inverter air-conditioner.
Fig. 8 illustrates an operation of a converter of the inverter air-conditioner.

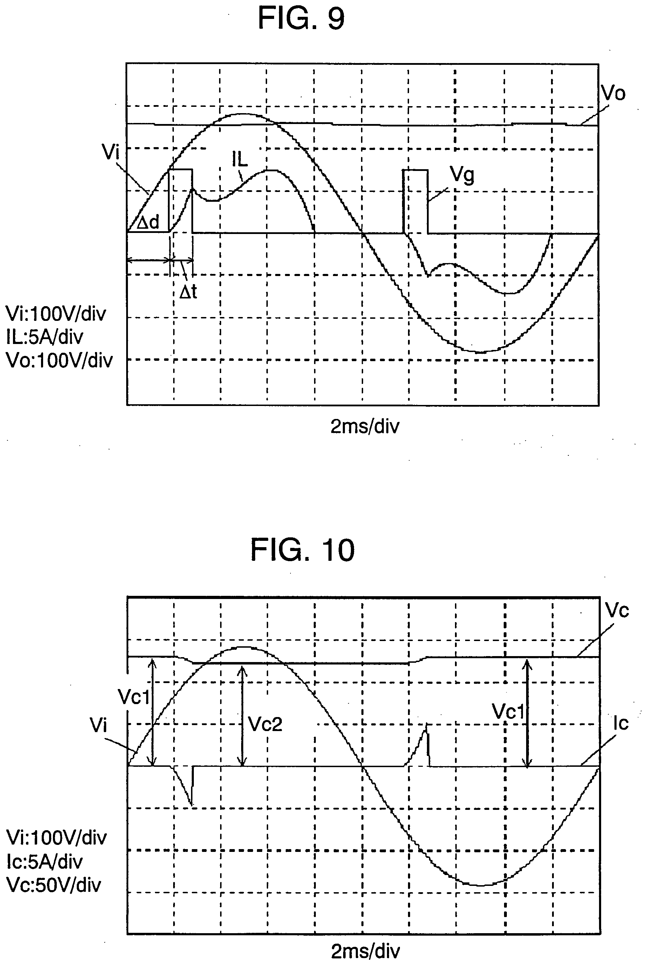

Fig. 9 shows waveforms of respective sections of the inverter air-conditioner.
Fig. 10 shows waveforms of respective sections of the inverter air-conditioner.

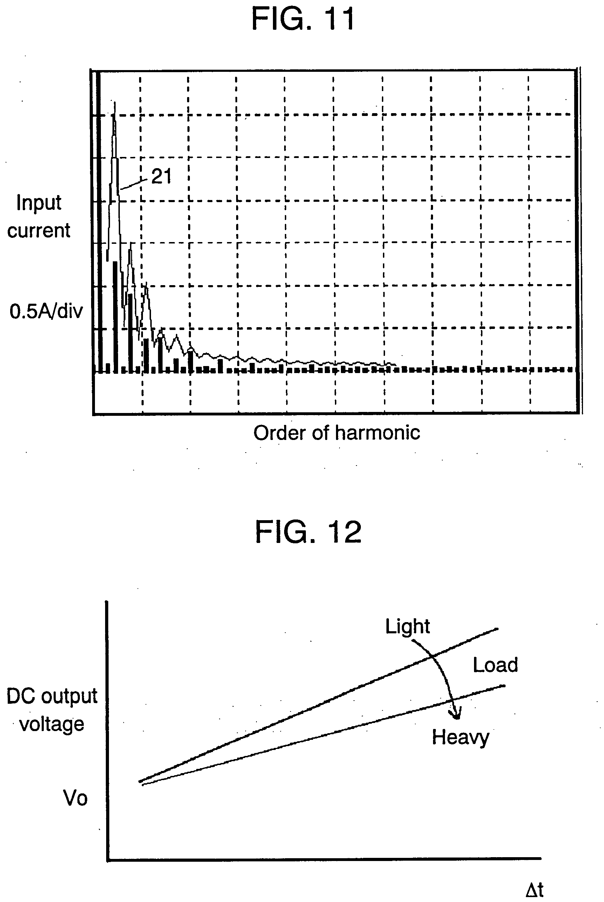

Fig. 11 illustrates harmonic component of an input current to the inverter air-conditioner and a guide line in Japan of regulating harmonic component.
Fig. 12 shows characteristics of converters in accordance with the first and a second exemplary embodiments of the present invention.

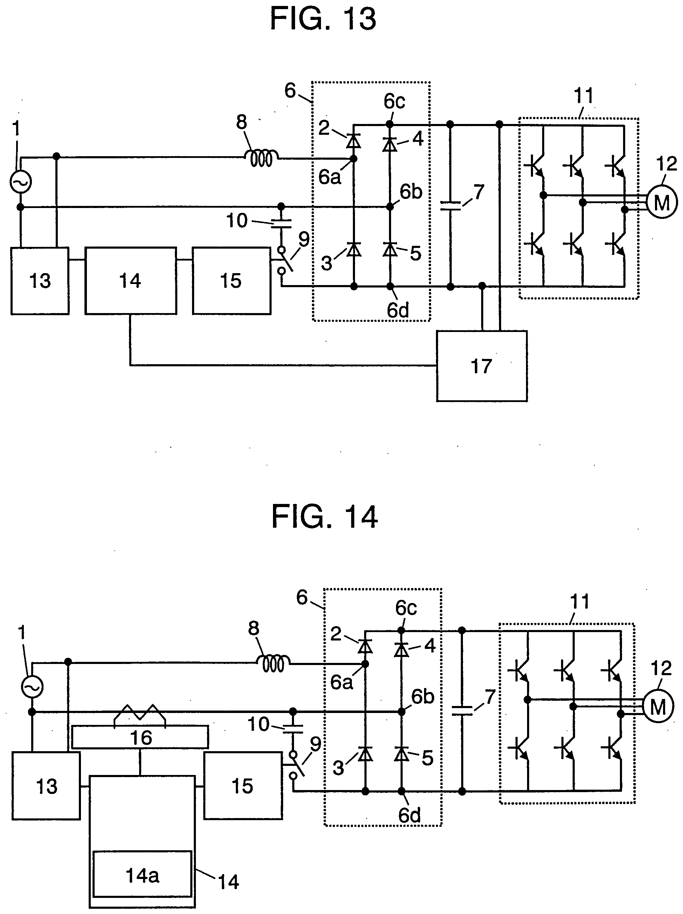

Fig. 13 shows a structure of an inverter air-conditioner in accordance with the second exemplary embodiment of the present invention.
Fig. 14 shows a structure of inverter air-conditioners in accordance with a third and a fourth exemplary embodiments of the present invention.

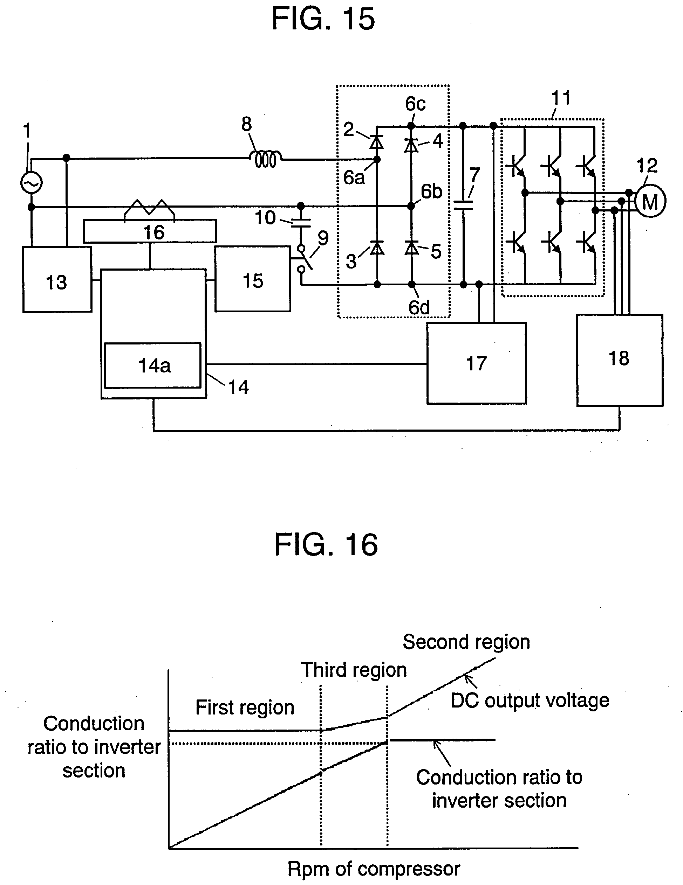

Fig. 15 shows a structure of an inverter air-conditioner in accordance with a fifth exemplary embodiment of the present invention.
Fig. 16 shows a structure of an inverter air-conditioner in accordance with a sixth exemplary embodiment of the present invention.

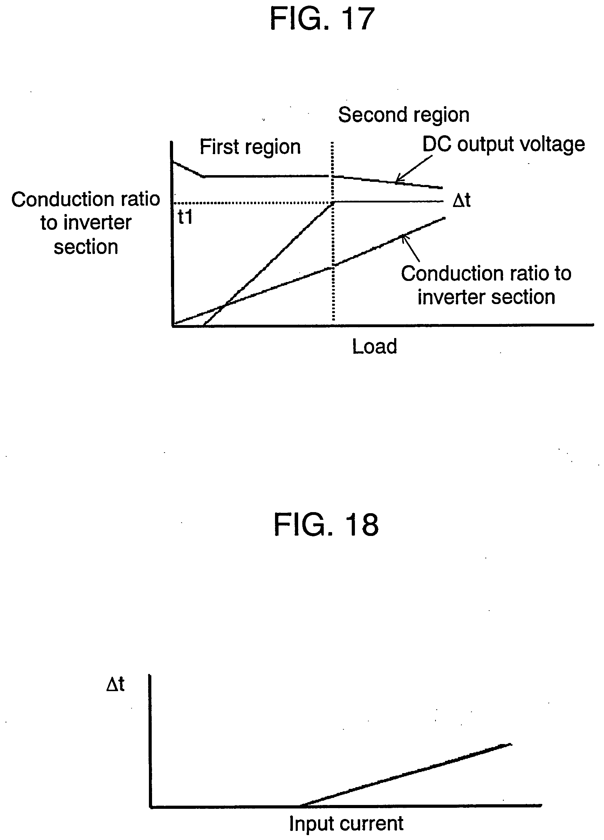

Fig. 17 shows a structure of an inverter air-conditioner in accordance with a seventh exemplary embodiment of the present invention.
Fig. 18 shows a structure of an inverter air-conditioner in accordance with a ninth exemplary embodiment of the present invention.

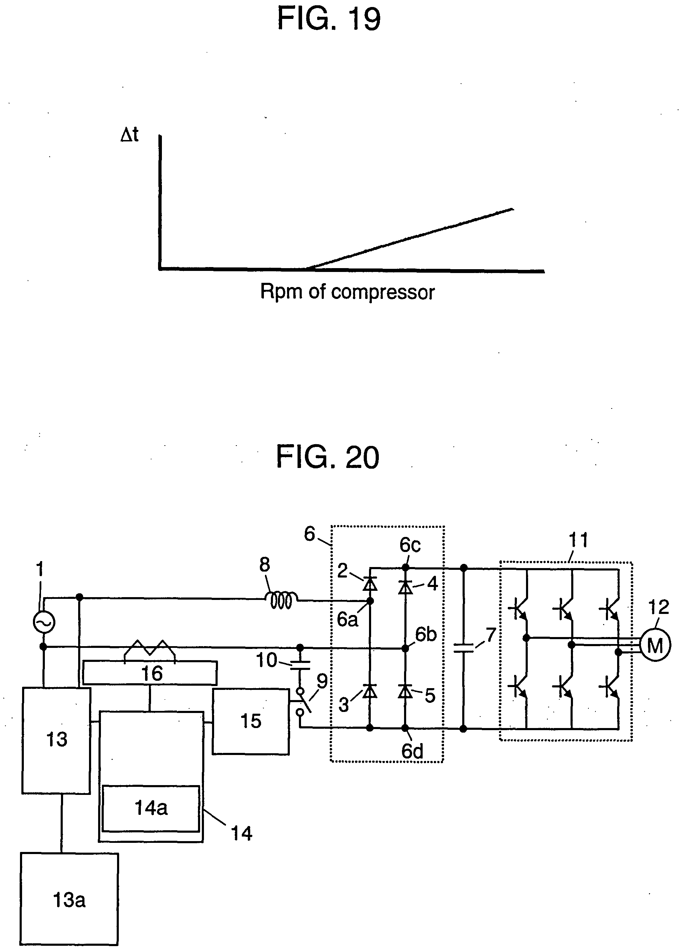

Fig. 19 shows a structure of an inverter air-conditioner in accordance with a tenth exemplary embodiment of the present invention.
Fig. 20 shows a structure of an inverter air-conditioner in accordance with an eleventh exemplary embodiment of the present invention.
Fig. 21 shows a circuit diagram of a converter of a conventional air-conditioner.
Fig. 22 shows a circuit diagram of a conventional converter.

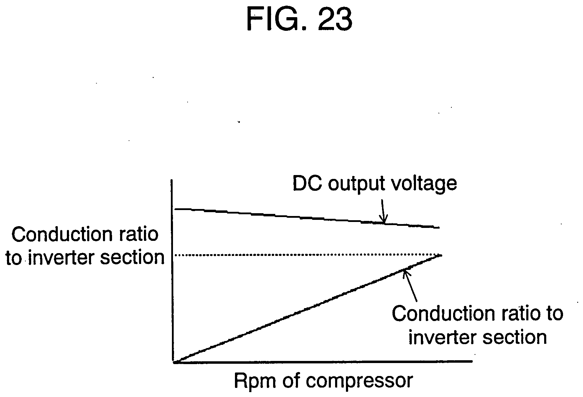

Fig. 23 illustrates control of the conventional air-conditioner.

Detailed Description of Exemplary Embodiments

Exemplary embodiments of the present invention are demonstrated hereinafter with reference to the accompanying drawings. Elements similar to the conventional examples discussed previously have the same reference marks.

Exemplary Embodiment 1

Fig. 1 through Fig. 4 show the structures of the inverter air-conditioners in accordance with the first exemplary embodiment of the present invention. Converters of the inverter air-conditioners shown in Fig. 1 through Fig. 4 comprise the following elements:

bridge rectifying circuit 6 formed of four diodes 2 - 5; and
ac power supply 1.

Between ac power supply 1 and a first end of an ac input to bridge rectifying circuit 6, reactor 8 is connected. Between a second end of an ac input to circuit 6 and a dc output terminal, capacitor 10 is connected.
In the structures shown in Fig. 1 and Fig. 2, capacitor 10 is coupled between ac input terminal 6a or 6b of circuit 6 and negative dc output terminal 6d via bi-directional switch 9. In the structures shown in Fig. 3 and Fig. 4, capacitor 10 is coupled between ac input terminal 6a or 6b and positive dc output terminal 6c via bi-directional switch 9.
Between positive dc output terminal 6c and negative output terminal 6d of circuit 6, smoothing capacitor 7 is connected. Capacitor 7 converts a dc with great ripples obtained through rectifying circuit 6 into a dc with smaller ripples.
Further, the circuit of the inverter air-conditioner of the present invention includes the following elements:

zero-cross detecting means 13 for detecting a zero-cross point of a voltage of ac power supply 1;
bi-directional switch driving signal generating means 14 for generating a driving signal for bi-directional switch 9 based on an output from the zero-cross detecting means 13; and
bi-directional switch driving means 15 for driving bi-directional switch 9 based on an output from bi-directional switch driving signal generating means 14.

In Fig. 2 through Fig. 4, zero-cross detecting means 13, bi-directional switch driving signal generating means 14, bi-directional switch driving means 15 and compressor speed control means 20 are omitted.

An operation of the converter shown in Fig. 1 is demonstrated hereinafter with reference to Fig. 5 through Fig. 8. Figs. 5 and 6 show statuses during a period of a half cycle where ac input voltage Vi stays positive, and Figs. 7, 8 shows status of a negative half cycle. Figs. 9 and 10 show waveforms of respective sections in the first exemplary embodiment when the converter shown in Fig. 1 are specified in the following condition: Vi=200V, L=10 mH, C=300 $\mu$F, and Co = 1800 $\mu$F.

Fig. 9 shows the following waveforms: ac input voltage Vi, current IL running through reactor 8 (ac input current), dc output voltage Vo, and drive signal Vg of bi-directional switch 9. Fig. 10 shows the following waveforms: ac input voltage Vi, current Ic running through capacitor 10, and voltage Vs across capacitor 10.

In the structure discussed above, bi-directional switch 9 is turned off just after the zero-cross of a positive half cycle of ac input voltage Vi, and dc output voltage Vo is higher than ac input voltage Vi, so that diodes 2, 5 are reversely biased. As a result, the input current does not flow.

At this time, capacitor 10 has been charged in the previous cycle and thus has voltage Vc1 with the polarity shown in the drawings. Bi-directional switch driving signal generating means 14 generates an ON signal of switch 9 after the time lapse of $\Delta$d from the zero-cross point along ac input voltage Vi from negative to positive region. When switch 9 is turned on by switch driving means 15, a current runs as shown with an arrow mark in Fig. 5.

In other words, the current runs from ac power supply 1, through reactor 8, diode 2, smoothing capacitor 7 and capacitor 10 in this order, then capacitor 10 discharges, and its voltage drops lower than Vc1. The time lapse of $\Delta$d is selected so that the sum of ac output voltage Vi and voltage Vc1 of capacitor 10 becomes greater than voltage Vo of smoothing capacitor 7 at the time when switch 9 is turned on.

After the time lapse of $\Delta$t from switching on switch 9, driving signal generating means 14 generates an OFF signal of switch 9. When switch 9 is turned off by switch driving means 15, capacitor 10 maintains voltage Vc2 at this moment, and the current flows from ac power supply 1, through reactor 8, diode 2, smoothing capacitor 7 and diode 5 in this order as shown in Fig. 6. However, ac input voltage Vi lowers, which also lowers voltage Vc2 of capacitor 10 to zero (0) in due course.

Just after the zero-cross of a negative half cycle of ac input voltage Vi, switch 9 is turned off. DC output voltage Vo is thus higher than ac input voltage Vi, so that diodes 3, 4 are reversely biased and the input current does not flow.

Bi-directional switch driving signal generating means 14 generates an ON signal of switch 9 after the time lapse of $\Delta$d from the zero-cross point along ac input voltage Vi from positive to negative region. When switch 9 is turned on by switch driving means 15, a current runs as shown with an arrow mark in Fig. 7.

In other words, the current runs from ac power supply 1, through capacitor 10, diode 3, reactor 8, in this order, so that capacitor 10 is charged. Bi-directional switch driving signal generating means 14 generates an OFF signal of switch 9 after the time lapse of $\Delta$d from the turn on of switch 9. When switch 9 is turned off by switch driving means 15, capacitor 10 maintains voltage Vc1 up to this level capacitor 10 having been charged. Then the current flows from ac power supply 1, through diode 4, smoothing capacitor 7, diode 3 and reactor 8 in this order as shown in Fig. 8. However, ac input voltage Vi lowers, which also lowers voltage Vc1 of capacitor 10 to zero (0) in due course.

As discussed above, charge and discharge of capacitor 10 allow the input current to flow from a point closer to a zero-cross of the input voltage than a conventional structure, thereby realizing a higher power factor.

An increment in $\Delta$t allows reactor 8 to store more magnetic energy as well as capacitor 10 to be charged more amount, so that dc output voltage Vo can be increased. In the same manner, a decrement in $\Delta$t can reduce dc output voltage Vo. As such, variations of $\Delta$t can vary dc output voltage Vo.

Further, the current becomes a dc resonance current between reactor 8 and capacitor 10 or smoothing capacitor 7, therefore, this structure can not only suppress a sharp increase of a current more effectively than a short circuit of reactor 8, which is usually used as a booster circuit, but also suppress the beat of reactor 8.

The dc resonance current does not include ringing component of high-frequency, so that a proper selection of inductance L of reactor 8, capacitance C of capacitor 10, and $\Delta$d, $\Delta$t can appropriately suppress harmonic component.

Fig. 11 shows a comparison between harmonic component of an ac input current and guide line 21 of a harmonic regulation in Japan. In this drawing, x-axis indicates order of harmonic, and y-axis indicates current values.

The operation of the converter shown in Fig. 1 is described above, and the converters shown in Fig. 2 through Fig. 4 operate in similar ways.

The operation discussed above proves that an increment in dc output voltage Vo can increase the maximum number of rotations (rpm) of compressor 12, so that the capacity of the air-conditioner can be boosted. The maximum input power to an air-conditioner is expressed, in general, by the following equation.

$$\text{Input power max.} = \text{input voltage} \times \text{input current max.} \times \text{input power}$$

factor

Since an input voltage is fixed and the input current max. is regulated by the rated value of a plug socket, input power max. can be raised by increasing an input power factor, which results in increasing the maximum capacity of the air-conditioner.

Exemplary Embodiment 2

Fig. 13 includes output voltage detecting means 17 added to Fig. 1. Based on an output from detecting means 17, bi-directional switch driving signal generating means 14 sets Δt.

Stability of rpm (rotations per minute) control of a compressor largely depends on a variation of a dc output voltage, thus output voltage detecting means 17 detects a dc output voltage and transmits it to driving signal generating means 14, which then sets Δt so that the dc output voltage becomes a predetermined value.

Speed control means 20 of compressor 12 varies a conduction ratio to inverter section 11 under the control of a pulse wave control method (PWM), thereby controlling the rpm of compressor 12.

The operation discussed above allows the dc output voltage to be constant regardless of variations in both the load and the power supply voltage, so that stable rpm control of the compressor can be realized.

Exemplary Embodiment 3

Fig. 14 includes load detecting means 16 and memory 14a that stores Δd, Δt in driving signal generating means 14. Those two elements (16 and 14a) are added to the elements shown in Fig. 1.

In the structure discussed above, memory 14a stores in advance a table which contains optimum Δd, Δt responsive to a load amount. Memory 14a receives an output from load detecting means 16, and reads out Δd, Δt from the table responsive to the load amount. Based on the Δd, Δt read out, signal generating means 14 generates a bi-directional switch driving signal, and driving means 15 drives bi-directional switch 9.

Through the operation discussed above, an input power factor and a dc output voltage both optimum to any load can be obtained, and the harmonic can be advantageously suppressed. The converter can be driven always at a working point optimum to a load change, thereby reducing a power consumption of the air-conditioner.

Exemplary Embodiment 4

In Fig. 14, bi-directional switch driving signal generating means 14 receives an output from load detecting means 16, and when the output reaches to a predetermined value, driving signal generating means 14 increases or decreases Δd or Δt, thereby selecting a combination of Δd and Δt so that the combination can reduce the output. Based on the selection, signal generating means 14 generates a driving signal.

Through the operation discussed above, an input power factor optimum to heavy load, in particular, can be obtained, so that a capacity of the power supply can be efficiently used, and the maximum capacity of the air-conditioner can be increased.

Exemplary Embodiment 5

Fig. 15 includes compressor's rpm detecting means 18 which is added to the elements shown in Fig. 14. In this structure, memory 14a stores in advance a table which contains optimum Δd, Δt responsive to an rpm of the compressor. Memory 14a receives an output from rpm detecting means 18, and reads out Δd, Δt responsive to the load amount. Based on the Δd, Δt read out, signal generating means 14 generates a bi-directional switch driving signal, and driving means 15 drives bi-directional switch 9.

Through the operation discussed above, an input power factor, a dc output voltage both optimum to any rpm can be obtained, and the harmonic can be advantageously suppressed.

Exemplary Embodiment 6

In the structure shown in Fig. 15, three kinds of compressor's rpm controls are available as follows:

(1) Signal generating means 14 sets Δt responsive to an rpm of compressor 12, controls a dc output voltage at a predetermined value, and varies a conduction ratio to inverter section 11 under the control of PWM, thereby controlling an rpm of compressor 12. A region where this control is applicable is called a first region.

(2) The conduction ratio to inverter section 11 is fixed, and the dc output voltage is varied, thereby controlling an rpm of converter 12. A region where this control is applicable is called a second region.

(3) The dc output voltage and conduction ratio to inverter section 11 are varied, thereby controlling an rpm of compressor 12. A region where this control is applicable is called a third region.

Fig. 16 shows relations between the dc output voltage, the conduction ratio to inverter section 11, and the rpm of converter 12 in the three regions discussed above.

In the first region, output voltage detecting means 17 detects a dc output voltage from the converter, and transmits it to driving signal generating means 14, which then sets $\Delta t$ so that the dc output voltage becomes a predetermined value.

In the second region, compressor's rpm detecting means 18 detects an rpm of compressor 12, and transmits it to driving signal generating means 14, which then sets $\Delta t$ so that the compressor rotates at a predetermined rpm.

In the third region, compressor's rpm detecting means 18 detects an rpm of compressor 12, and transmits it to driving signal generating means 14, which then sets $\Delta t$ so that the compressor rotates at a predetermined rpm, and varies the conduction ratio to inverter section 11 under the PWM control corresponding to the variation of $\Delta t$.

The operation discussed above allows the dc output voltage to stay constant in the first region regardless of variations in the load and the dc output voltage, so that stable control of the rpm of the compressor can be expected. The dc output voltage is predetermined so that a comprehensive efficiency of the converter and the inverter section becomes optimum at respective rpm. As a result, highly efficient operation of the air-conditioner can be realized.

In the second region, the rpm of compressor 12 can be controlled in the condition of 100% conduction ratio to inverter section 11. Thus a loss of switching elements in inverter section 11 decreases, and efficient operation can be expected. In addition to this, the rpm can be increased by boosting the output voltage, so that the maximum rpm of compressor 12 increases. As a result, the maximum capacity of the air-conditioner can be increased.

In the third region, a changeover period can be provided, by boosting both of the conduction ratio and the dc output voltage, between the region where only the conduction ratio to inverter section 11 can control the rpm of compressor 12 and another region where only the dc output voltage can control the rpm. The presence of this changeover period assists the rpm of compressor 12 to change smoothly when the operation moves from the region to another region.

In a region where rather a light load is applied, stable control of the rpm of compressor 12 can be expected. In a region where a heavy load is applied, the maximum rpm of compressor 12 can be increased by boosting the dc output voltage, so that the maximum capacity of the air-conditioner is improved.

Exemplary Embodiment 7

In the structure shown in Fig. 15, bi-directional switch driving signal generating means 14 sets $\Delta t$ within the range of $0 \leqq \Delta t \leqq t1$ so that an output voltage can stay constant, and varies a conduction ratio to inverter section 11 under PWM control, thereby controlling an rpm of compressor 12. A region where this rpm control method is applied is called a first region. While in a second region, $\Delta t$ is fixed at t1, and the conduction ratio to inverter section 11 is changed, thereby controlling the rpm of compressor 12. Fig. 17 shows the relations between At, the output voltage and the conduction ratio to inverter section 11 in those control methods.

In this structure, output voltage detecting means 17 detects a dc output voltage from the converter, and transmits it to signal generating means 14, which then sets $\Delta t$ within the range of $0 \leqq \Delta t \leqq t1$ so that the dc output voltage can be a predetermined value. In the first region, the dc output voltage from the converter is controlled to be the predetermined value, and the rpm of compressor 12 can be controlled by varying the conduction ratio to inverter section 11.

When a load becomes heavier, the dc output voltage from the converter is controlled at the predetermined value by increasing $\Delta t$. Thus at a certain load, $\Delta t$ becomes equal to t1, and the operation moves to the second region. In the second region, the dc output voltage is lower than the predetermined value; however, signal generating means 14 fixes $\Delta t$ at t1, and varies the conduction ratio to inverter section 11, thereby controlling the rpm of compressor 12.

The load decreases with $\Delta t$ fixed at t1, so that the dc output voltage from the converter increases, and when the voltage reaches to the predetermined value, the operation moves to the first region from the second region. The structure discussed above allows to suppress harmonic current appropriately and can prevent the dc output voltage from rising to a value higher than necessary by setting an upper limit of $\Delta t$.

The maximum capacity of bi-directional switch depends on the maximum value of At. Therefore, the max. capacity of switch 9 can be regulated by setting the upper limit of $\Delta t$. As a result, the elements can be downsized and the cost thereof can be reduced. Further, in the region where $\Delta t$ is fixed, since the rpm of compressor 12 can be controlled only by the conduction ratio, the control can be simplified.

While a light load is applied, this structure prevents converter's dc output voltage from rising to a value higher than necessary, thereby preventing respective elements in an electronic control device of the inverter air-conditioner from being damaged due to over voltage.

Exemplary Embodiment 8

In the structure shown in Fig. 13, bi-directional switch driving signal generating means 14 sets $\Delta t$ so that a dc output voltage becomes a predetermined value, and changes a conduction ratio to inverter section 11 under PWM control. This operation produces the following influences: In the case of controlling an rpm of compressor 12, (1) a change speed of the conduction ratio which controls the rpm influences the rpm of the compressor, and (2) a change speed of $\Delta t$ which controls a dc output voltage of the converter influences the rpm of the converter. These influences are described hereinafter.

For instance, when the conduction ratio to inverter section 11 is increased, thereby increasing the rpm of compressor 12, the load simultaneously increases, thus the dc output voltage decreases. Therefore, signal generating means 14 increases $\Delta t$ in advance so that the dc output voltage becomes a predetermined value, thereby increasing the dc output voltage.

In this case, if a change speed of the conduction ratio is slow, the reduction of the conduction ratio is not enough for the increment of the output voltage, so that the rpm of converter 12 further increases and sometimes exceeds a predetermined rpm. Thus stable control of the rpm cannot be expected, because the control of dc output voltage from inverter section 11 and the control of compressor's rpm interfere with each other.

Therefore, the change speed of the conduction ratio into inverter section 11 is set at a speed faster enough than an increasing speed and a decreasing speed of the dc output voltage, so that the rpm of compressor 12 can correspond to the change of the dc output voltage in a substantially short time. As a result, stable control of the rpm is obtainable.

Exemplary Embodiment 9

In the structure shown in Fig. 14, when an input current is lower than a predetermined value, $\Delta t$ is set at 0 ($\Delta t=0$), if the input current exceeds the predetermined value $\Delta t$ is set over 0 ($\Delta t > 0$). Fig. 18 shows a relation between this input current and $\Delta t$.

While a light load is applied, setting of $\Delta t=0$ can cause a dc output voltage to rise to a value higher than necessary. In this structure, bi-directional switch driving signal generating means 14 selects $\Delta t=0$ if the input current transmitted from input current detecting means 16 is less than the predetermined value, and selects $\Delta t > 0$ if the input current exceeds the predetermined value, thereby preventing the dc output voltage from abnormal increase.

In this ninth embodiment, the predetermined value of the input current differs in a cooling drive and in a heating drive. Therefore, the converter can be driven at optimum switching points in the respective drives. As a result, power consumption of the air-conditioner can be reduced.

Exemplary Embodiment 10

In the structure shown in Fig. 15, if an rpm of compressor 12 is less than a predetermined value, $\Delta t$ is set to be equal to 0 ($\Delta t=0$), and if the rpm exceeds the predetermined value, $\Delta t$ is set at a value more than 0 (($\Delta t > 0$). Fig. 19 shows a relation between the rpm of compressor 12 and variation of $\Delta t$.

In the structure discussed above, bi-directional switch driving signal generating means 14 selects $\Delta t=0$ if the rpm transmitted from compressor's rpm detecting means 18 is less than the predetermined value, and selects $\Delta t > 0$ if the rpm exceeds the predetermined value, thereby preventing the dc output voltage from abnormal increase.

In this tenth embodiment, the predetermined value of the rpm differs in a cooling drive and in a heating drive. Therefore, the converter can be driven at optimum switching points in the respective drives. As a result, power consumption of the air-conditioner can be reduced.

In this tenth embodiment, when an instructed rpm of the compressor exceeds the predetermined value, the setting of $\Delta t > 0$ is selected, and when the instructed rpm is less than the predetermined value, the setting of $\Delta t=0$ is selected. This mechanism prevents the output voltage from increasing to a value higher than necessary during light load driving, thereby preventing respective elements in an electronic control device of the inverter air-conditioner from being damaged due to over voltage.

Further in the tenth embodiment, a predetermined value of an instructed rpm of the compressor differs in the cooling drive and in the heating drive. Therefore, the converter can be driven at optimum switching points in the respective drives. As a result, power consumption of the air-conditioner can be reduced.

Exemplary Embodiment 11

Fig. 20 includes power supply frequency detecting means 13a which is added to the elements shown in Fig. 13. Based on an output from frequency detecting means 13a, bi-directional switch driving signal generating means 14 sets ∆d.

In a specific range of load change, ∆d can be a constant value without fine adjustment responding to changes of load. Even in this condition, an appropriate input power factor is obtainable, and harmonic can be suppressed. On the other hand, ∆d is preferably changed to an appropriate value responsive to 50 Hz and 60 Hz of the power supply.

In the foregoing structure, power supply frequency detecting means 13a detects a frequency of the power supply, and transmits it to signal generating means 14, which then sets ∆d at a predetermined value responsive to the power supply frequency. Based on the set ∆d, bi-directional switch driving means 15 drives switch 9.

The operation discussed above allows ∆d to stay constant in the specific range of load change, so that the control of switch 9 can be simplified. Further, regardless of a frequency of the power supply, an appropriate input power factor and an appropriate dc output voltage can be obtained, and harmonic can be suppressed.

In the present invention, the bi-directional switch includes a bi-directional thyristor, and FET transistors coupled with each other in parallel so that a current flows in both ways.

In the inverter air-conditioner of the present invention, a capacitor is connected via a bi-directional switch between an ac input terminal and a dc output terminal of a bridge rectifying circuit in a converter. The switch is appropriately operated and a control method of an rpm of a compressor is switched appropriately, so that a high input power factor can be compatible with suppression of harmonic, and the max. capacity of the air-conditioner can be increased.


**Claims**

**1.** An inverter air-conditioner comprising:

(a) a converter including:

(a-1) an ac power supply (1);
(a-2) a bridge rectifying circuit (6) for full-wave rectifying an ac output from the ac power supply;
(a-3) a smoothing capacitor (7) to be coupled with a dc output terminal of the bridge rectifying circuit;
(a-4) a reactor (8) to be coupled between the ac power supply and a first end of an ac input to the bridge rectifying circuit;
(a-5) zero-cross detecting means (13) for detecting a zero point where an ac voltage of the ac power supply becomes 0 (zero);
(a-6) bi-directional switch driving signal generating means (14) for generating a signal for driving a bi-directional switch (9) based on an output from the zero-cross detecting means;
(a-7) bi-directional switch driving means (15) for driving the bi-directional switch based on the signal supplied from the bi-directional switch driving signal generating means;

(b) an inverter section (11) for converting a dc output voltage from the converter into an ac voltage;
(c) a compressor (12) to be driven by the inverter section; and
(d) speed control means (20) which controls one of an output frequency and an output voltage from the inverter section so that the compressor can be driven at an instructed speed,

wherein the converter further comprises a capacitor (10) serially connected with the bi-directional switch (9), the serial connection of capacitor (10) and bi-directional switch (9) being connected between a second terminal of the ac power supply for the bridge rectifying circuit and one of a positive dc (6c) and a negative dc (6d) output terminal from the bridge rectifying circuit,
wherein the bi-directional switch driving signal generating means generates an ON signal after a time lapse of ∆d, $0 \leq d$, from a zero point where a voltage of the ac power supply becomes 0 (zero), and generates an OFF signal in ∆t, $0 \leq t$, after generating the ON signal, for controlling both of harmonic component of an input current flowing in from the ac power supply and a dc output voltage across the smoothing capacitor,
**characterised in that**
the inverter air-conditioner further comprises an input current detecting means (16) for detecting an input current; and memory means (14a) for storing in advance combinations of ∆d and ∆t responsive to the input current into the bi-directional switch driving signal generating means,
wherein a combination of ∆d and ∆t is selected from the memory means responsive to the input current based on an output from the input current detecting means.

2. The inverter air-conditioner of claim 1 further comprising:

converter output voltage detecting means (17) for detecting a dc output voltage of the converter; and memory means (14a) for storing a predetermined target output voltage in the bi-directional switch driving signal generating means, (14) wherein $\Delta t$ is controlled such that when the converter outputs a voltage lower than the predetermined target voltage, $\Delta t$ is increased, and when the converter outputs a voltage higher than the predetermined target voltage, $\Delta t$ is decreased, for bringing the output voltage from the converter close to the target voltage.

3. The inverter air-conditioner of claim 1, wherein when the output from the input current detecting means (16) reaches to a predetermined value, a combination of $\Delta d$ and $\Delta t$ is selected so that the input current can be smaller.

4. The inverter air-conditioner of claim 1 further comprising:

a compressor rpm detecting means (18) for detecting a rpm of the compressor (12); and memory means (14a) for storing in advance combinations of $\Delta d$ and $\Delta t$ responsive to the rpm of the compressor into the bi-directional switch driving signal generating means (14), wherein a combination of $\Delta d$ and $\Delta t$ is selected from the memory means responsive to a rpm based on an output from the compressor rpm detecting means.

5. The inverter air-conditioner of claim 1 further comprising:

memory means (14a) for storing in advance combinations of $\Delta d$ and $\Delta t$ responsive to an instructed rpm of the compressor (12) into the bi-directional switch driving signal generating means (14), wherein a combination of $\Delta d$ and $\Delta t$ is selected based on the instructed rpm.

6. The inverter air-conditioner of claim 1 further comprising:

load detecting means (16) for detecting a load applied to the converter; memory means (14a) for storing in advance a target output voltage responsive to at least one of a rpm of the compressor (12), an instructed rpm of the compressor and an output from the load detecting means into the bi-directional switch driving signal generating means (14), wherein the bi-directional switch driving signal generating means is configured to operate in a first region where $\Delta t$ is selected so that the dc output voltage is brought closely to the target output voltage stored in the memory means, and the speed control means (20) of the compressor varies the conduction ratio to the inverter section (11) for controlling the rpm of the compressor, wherein the bi-directional switch driving signal generating means is configured to operate in a second region where the conduction ratio is fixed, and the bi-directional switch driving signal generating means varies $\Delta t$ based on an output from compressor rpm detecting means (18) for varying the dc output voltage from the converter, so that the rpm of the compressor is controlled, and wherein the bi-directional switch driving signal generating means is configured to operate in a third region where $\Delta t$ and the conduction ratio in the bi-directional switch driving signal generating means are simultaneously varied for controlling the rpm of the compressor.

7. The inverter air-conditioner of claim 1, wherein the bi-directional switch driving signal generating means (14) is configured to operate in a first region where $\Delta t$ is selected from a range of $0 \le \Delta t \le t1$ so that the output voltage from the converter can be a predetermined value, the conduction ratio to the inverter section (11) is varied, so that an rpm of the converter is controlled, wherein the bi-directional switch driving signal generating means is configured to operate in a second region where $\Delta t$ is fixed at t1, and the conduction ratio is varied, so that the rpm of the compressor (12) is controlled.

8. The inverter air-conditioner of claim 1, wherein a change speed of a conduction ratio in the compressor speed control means (20) is faster than a change speed of $\Delta t$ in the bi-directional switch driving signal generating means (14).

9. The inverter air-conditioner of claim 8, wherein at least one of the change speed of $\Delta t$ and the change speed of the conduction ratio is varied responsive to at least one of an rpm of the compressor, an instructed rpm of the compressor and an output from a load detecting means (16).

10. The inverter air-conditioner of claim 1 or claim 2 through claim 9, wherein when the input current detected by the input current detecting means (16) exceeds a predetermined value, a status of $\Delta t$ 0 is held, and when the detected input current is less than the predetermined value, a status of $\Delta t = 0$ is held.

11. The inverter air-conditioner of claim 10, wherein the predetermined value of the input current differs in a cooling drive and a heating drive.

12. The inverter air-conditioner of any one of claim 1 through claim 3 and claim 5 through 9 further comprising:

a compressor rpm detecting means (18) for detecting a rpm of the compressor,
wherein when the rpm of the compressor exceeds a predetermined value, a status of $\Delta t > 0$ is held, and when the rpm is less than the predetermined value, a status of $\Delta t = 0$ is held.

13. The inverter air-conditioner of claim 4, wherein when the rpm detected by the compressor rpm detecting means (18) exceeds a predetermined value, a status of $\Delta t > 0$ is held, and when the detected rpm is less than the predetermined value, a status of $\Delta t = 0$ is held.

14. The inverter air-conditioner of claim 12, wherein the predetermined value of the rpm differs in a cooling drive and a heating drive.

15. The inverter air-conditioner of claim 13, wherein the predetermined value of the rpm differs in a cooling drive and a heating drive.

16. The inverter air-conditioner of any one of claim 1 through claim 9, wherein while the bi-directional switch driving signal generating means (14) generates an OFF signal, when an instructed rpm of the compressor (12) exceeds a predetermined value, a status of $\Delta t > 0$ is held, and when the instructed rpm is less than the predetermined value, a status of $\Delta t = 0$ is held.

17. The inverter air-conditioner of claim 16, wherein the instructed rpm of the compressor (12) differs in a cooling drive and a heating drive.

18. The inverter air-conditioner of any one of claim 1 through claim 10, claims 11 through 16 and 17, further comprising:

a power supply frequency detecting means (13a) for detecting a frequency of the ac power supply (1),
wherein $\Delta d$ is selected responsive to a frequency of the ac power supply based on an output from the power supply frequency detecting means.

**Patentansprüche**

1. Wechselrichteranordnung für eine Klimaanlage, aufweisend:

(a) einen Wandler, aufweisend:

(a-1) eine Wechselstromversorgung (1);
(a-2) eine Brückengleichrichterschaltung (6) zur Vollwellengleichrichtung eines von der Wechselstromversorgung gelieferten Wechselstroms;
(a-3) einen Glättungskondensator (7), der mit einem Gleichstromausgangsanschluss der Brückengleichrichterschaltung verbunden ist;
(a-4) einen Reaktor (8), der zwischen der Wechselstromversorgung und einem ersten Ende eines Wechselstromeingangs zur Brückengleichrichterschaltung angeschlossen ist;
(a-5) eine Nulldurchgang-Erfassungseinrichtung (13) zum Erfassen eines Nullpunkts, bei dem eine Wechselstromspannung der Wechselstromversorgung 0 (null) wird;
(a-6) eine Bidirektionalschalter-Treibersignal-Erzeugungseinrichtung (14) zum Erzeugen eines Signals zum Ansteuern eines Bidirektionalschalters (9) auf Basis eines Ausgangs von der Nulldurchgang-Erfassungseinrichtung;

(a-7) eine Bidirektionalschalter-Treibereinrichtung (15) zum Ansteuern des Bidirektionalschalters auf Basis des von der Bidirektionalschalter-Treibersignal-Erzeugungseinrichtung zugeführten Signals;

(b) einen Wechselrichterabschnitt (11) zum Umwandeln einer Gleichstromausgangsspannung vom Wandler in eine Wechselspannung;

(c) einen Kompressor (12), der durch den Wechselrichterabschnitt angetrieben wird; und

(d) eine Geschwindigkeitssteuereinrichtung (20), die eine von einer Ausgangsfrequenz und einer Ausgangsspannung vom Wechselrichterabschnitt steuert, so dass der Kompressor mit einer angewiesenen Geschwindigkeit angetrieben werden kann, wobei der Wandler ferner einen Kondensator (10) aufweist, der in Reihe mit dem Bidirektionalschalter (9) geschaltet ist, wobei die Reihenschaltung des Kondensators (10) und des Bidirektionalschalters (9) zwischen einem zweiten Anschluss der Wechselstromversorgung für die Brückengleichrichterschaltung und einem von einem positiven Gleichstromausgang (6c) und einem negativen Gleichstromausgang (6d) von der Brückengleichrichterschaltung angeschlossen ist,

wobei

die Bidirektionalschalter-Treibersignal-Erzeugungseinrichtung ein EIN-Signal nach einem Zeitablauf von $\Delta$d, $0 \leq$d, von einem Nullpunkt erzeugt, wenn eine Spannung der Wechselstromversorgung 0 (null) wird, und ein AUS-Signal von $\Delta$t, $0 \leq$t, nach Erzeugen des EIN-Signals zum Steuern sowohl der harmonischen Komponente eines Eingangsstroms, der von der Wechselstromversorgung fließt, als auch einer Gleichstromausgangsspannung über den Glättungskondensator,

**dadurch gekennzeichnet, dass**

die Wechselrichteranordnung für eine Klimaanlage ferner eine Eingangsstrom-Erfassungseinrichtung (16) zum Erfassen eines Eingangsstroms aufweist; und

eine Speichereinrichtung (14a) zum Vorabspeichern von Kombinationen von $\Delta$d und $\Delta$t, die maßgeblich für den Eingangsstrom in die Bidirektionalschalter-Treibersignal-Erzeugungseinrichtung sind,

wobei eine Kombination von $\Delta$d und $\Delta$t ausgewählt wird aus der Speichereinrichtung in Abhängigkeit vom Eingangsstrom auf Basis eines Ausgangs von der Eingangsstrom-Erfassungseinrichtung.

2. Wechselrichteranordnung für eine Klimaanlage nach Anspruch 1, ferner aufweisend:

eine Wandlerausgangsspannung-Erfassungseinrichtung (17) zum Erfassen einer Ausgangsgleichspannung vom Wandler; und

eine Speichereinrichtung (14a) zum Speichern einer im Voraus festgelegten Zielausgangsspannung in der Bidirektionalschalter-Treibersignal-Erzeugungseinrichtung (14),

wobei $\Delta$t auf solche Weise gesteuert wird, dass, wenn der Wandler eine Spannung ausgibt, die niedriger als die im Voraus festgelegte Zielausgangsspannung ist, $\Delta$t erhöht wird, und wenn der Wandler eine Spannung ausgibt, die höher als die im Voraus festgelegte Zielausgangsspannung ist, $\Delta$t verringert wird, um die Ausgangsspannung vom Wandler nahe der Zielspannung zu bringen.

3. Wechselrichteranordnung für eine Klimaanlage nach Anspruch 1, wobei, wenn der Ausgang von der Eingangsstrom-Erfassungseinrichtung (16) einen im Voraus festgelegten Wert erreicht, eine Kombination von $\Delta$d und $\Delta$t ausgewählt wird, so dass der Eingangsstrom niedriger sein kann.

4. Wechselrichteranordnung für eine Klimaanlage nach Anspruch 1, ferner aufweisend:

eine Kompressordrehzahl-Erfassungseinrichtung (18) zum Erfassen einer Drehzahl des Kompressors (12); und

eine Speichereinrichtung (14a) zum Vorabspeichern von Kombinationen von $\Delta$d und $\Delta$t, die maßgeblich für die Drehzahl des Kompressors sind, in der Bidirektionalschalter-Treibersignal-Erzeugungseinrichtung (14),

wobei eine Kombination von $\Delta$d und $\Delta$t aus der Speichereinrichtung in Abhängigkeit von einer Drehzahl auf Basis eines Ausgangs von der Kompressordrehzahl-Erfassungseinrichtung ausgewählt wird.

5. Wechselrichteranordnung für eine Klimaanlage nach Anspruch 1, ferner aufweisend:

eine Speichereinrichtung (14a) zum Vorabspeichern von Kombinationen von $\Delta$d und $\Delta$t, die maßgeblich für eine angewiesene Drehzahl des Kompressors (12) sind, in der Bidirektionalschalter-Treibersignal-Erzeugungseinrichtung (14),

wobei eine Kombination von $\Delta$d und $\Delta$t auf Basis der angewiesenen Drehzahl ausgewählt wird.

6. Wechselrichteranordnung für eine Klimaanlage nach Anspruch 1, ferner aufweisend:

   eine Lasterfassungseinrichtung (16) zum Erfassen einer am Wandler angelegten Last; eine Speichereinrichtung (14a) zum Vorabspeichern einer Zielausgangsspannung, die maßgeblich für mindestens eines von der Drehzahl des Kompressors (12), einer angewiesenen Drehzahl des Kompressors und einem Ausgang von der Lasterfassungseinrichtung an die Bidirektionalschalter-Treibersignal-Erzeugungseinrichtung (14) ist,
   wobei die Bidirektionalschalter-Treibersignal-Erzeugungseinrichtung konfiguriert ist für einen Betrieb in einem ersten Bereich, in dem Δt so gewählt wird, dass die Gleichstromausgangsspannung nahe der in der Speichereinrichtung gespeicherten Zielausgangsspannung ist und die Geschwindigkeitssteuereinrichtung (20) des Kompressors das Leitungsverhältnis zum Wechselrichterabschnitt (11) zum Steuern der Drehzahl des Kompressors variiert,
   wobei die Bidirektionalschalter-Treibersignal-Erzeugungseinrichtung konfiguriert ist für einen Betrieb in einem zweiten Bereich, in dem das Leitungsverhältnis festgelegt ist, und die Bidirektionalschalter-Treibersignal-Erzeugungseinrichtung Δt auf Basis eines Ausgangs von der Kompressordrehzahl-Erfassungseinrichtung (18) zum Variieren der Gleichstromausgangsspannung vom Wandler variiert, so dass die Drehzahl des Kompressors gesteuert wird, und
   wobei die Bidirektionalschalter-Treibersignal-Erzeugungseinrichtung konfiguriert ist für einen Betrieb in einem dritten Bereich, in dem Δt und das Leitungsverhältnis in der Bidirektionalschalter-Treibersignal-Erzeugungseinrichtung zum Steuern der Drehzahl des Kompressors gleichzeitig variiert werden.

7. Wechselrichteranordnung für eine Klimaanlage nach Anspruch 1, wobei die Bidirektionalschalter-Treibersignal-Erzeugungseinrichtung (14) konfiguriert ist für einen Betrieb in einem ersten Bereich, in dem Δt aus einem Bereich $0 \leq \Delta t \leq t1$ gewählt wird, so dass die Ausgangsspannung vom Wandler ein im Voraus festgelegter Wert sein kann, das Leitungsverhältnis zum Wechselrichterabschnitt (11) variiert wird, so dass eine Drehzahl des Kompressors gesteuert wird,
   wobei die Bidirektionalschalter-Treibersignal-Erzeugungseinrichtung konfiguriert ist für einen Betrieb in einem zweiten Bereich, in dem Δt auf t1 festgelegt ist und das Leitungsverhältnis variiert wird, so dass die Drehzahl des Kompressors (12) gesteuert wird.

8. Wechselrichteranordnung für eine Klimaanlage nach Anspruch 1, wobei eine Änderungsgeschwindigkeit eines Leitungsverhältnisses in der Kompressorgeschwindigkeits-Steuereinrichtung (20) höher ist als eine Änderungsgeschwindigkeit von Δt in der Bidirektionalschalter-Treibersignal-Erzeugungseinrichtung (14).

9. Wechselrichteranordnung für eine Klimaanlage nach Anspruch 8, wobei mindestens eine der Änderungsgeschwindigkeit von Δt und der Änderungsgeschwindigkeit des Leitungsverhältnisses in Abhängigkeit von mindestens einem von einer Drehzahl des Kompressors, einer angewiesenen Drehzahl des Kompressors und einem Ausgang von einer Lasterfassungseinrichtung (16) variiert wird.

10. Wechselrichteranordnung für eine Klimaanlage nach Anspruch 1 oder Ansprüche 2 bis 9, wobei, wenn der von der Eingangsstrom-Erfassungseinrichtung (16) erfasste Eingangsstrom einen im Voraus festgelegten Wert überschreitet, ein Status Δt>0 gehalten wird, und wenn der erfasste Eingangsstrom niedriger ist als der im Voraus festgelegte Wert, ein Status Δt=0 gehalten wird.

11. Wechselrichteranordnung für eine Klimaanlage nach Anspruch 10, wobei der im Voraus festgelegte Wert des Eingangsstroms in einem Kühlantrieb und einem Heizantrieb unterschiedlich ist.

12. Wechselrichteranordnung für eine Klimaanlage nach einem der Ansprüche 1 bis 3 und 5 bis 9, ferner aufweisend:

    eine Kompressordrehzahl-Erfassungseinrichtung (18) zum Erfassen einer Drehzahl des Kompressors,
    wobei, wenn die Drehzahl des Kompressors einen im Voraus festgelegten Wert überschreitet, ein Status Δt>0 gehalten wird, und wenn die Drehzahl niedriger ist als der im Voraus festgelegte Wert, ein Status Δt=0 gehalten wird.

13. Wechselrichteranordnung für eine Klimaanlage nach Anspruch 4, wobei, wenn die von der Kompressordrehzahl-Erfassungseinrichtung (18) erfasste Drehzahl einen im Voraus festgelegten Wert überschreitet, ein Status Δt>0 gehalten wird, und wenn die erfasste Drehzahl niedriger ist als der im Voraus festgelegte Wert, ein Status Δt=0 gehalten wird.

**14.** Wechselrichteranordnung für eine Klimaanlage nach Anspruch 12, wobei der im Voraus festgelegte Wert der Drehzahl in einem Kühlantrieb und einem Heizantrieb unterschiedlich ist.

**15.** Wechselrichteranordnung für eine Klimaanlage nach Anspruch 13, wobei der im Voraus festgelegte Wert der Drehzahl in einem Kühlantrieb und einem Heizantrieb unterschiedlich ist.

**16.** Wechselrichteranordnung für eine Klimaanlage nach einem der Ansprüche 1 bis 9, wobei, während die Bidirektionalschalter-Treibersignal-Erzeugungseinrichtung (14) ein AUS-Signal erzeugt, wenn eine angewiesene Drehzahl des Kompressors (12) einen im Voraus festgelegten Wert überschreitet, ein Status $\Delta t>0$ gehalten wird, und wenn die angewiesene Drehzahl niedriger ist als der im Voraus festgelegte Wert, ein Status $\Delta t=0$ gehalten wird.

**17.** Wechselrichteranordnung für eine Klimaanlage nach Anspruch 16, wobei die angewiesene Drehzahl des Kompressors (12) in einem Kühlantrieb und einem Heizantrieb unterschiedlich ist.

**18.** Wechselrichteranordnung für eine Klimaanlage nach einem der Ansprüche 1 bis 10, Ansprüche 11 bis 16 und 17, ferner aufweisend:

eine Stromversorgungsfrequenz-Erfassungseinrichtung (13a) zum Erfassen einer Frequenz der Wechselstromversorgung (1), wobei $\Delta d$ in Abhängigkeit von einer Frequenz der Wechselstromversorgung auf Basis eines Ausgangs von der Stromversorgungsfrequenz-Erfassungseinrichtung ausgewählt wird.

## Revendications

**1.** Onduleur pour installation d'air conditionné comprenant :

(a) un convertisseur comprenant :

(a-1) une alimentation de courant alternatif (1) ;
(a-2) un circuit de redressement en pont (6) pour redresser, par onde entière, une sortie de courant alternatif d'une alimentation de courant alternatif ;
(a-3) un condensateur de lissage (7) destiné à être couplé avec une borne de sortie de courant continu du circuit de redressement en pont ;
(a-4) un réacteur (8) destiné à être couplé entre l'alimentation de courant alternatif et une première extrémité d'une entrée de courant alternatif, au circuit de redressement en pont ;
(a-5) un moyen de détection de passage par zéro (13) pour détecter un point zéro où une tension de courant alternatif de l'alimentation de courant alternatif devient 0 (zéro) ;
(a-6) un moyen de génération de signal d'entraînement de commutateur bidirectionnel (14) pour générer un signal pour entraîner un commutateur bidirectionnel (9) en fonction d'un résultat du moyen de détection de passage par zéro ;
(a-7) un moyen d'entraînement de commutateur bidirectionnel (15) pour entraîner le commutateur bidirectionnel en fonction du signal fourni par le moyen de génération de signal d'entraînement de commutateur bidirectionnel ;

(b) une section d'onduleur (11) pour convertir une tension de sortie de courant continu du convertisseur en une tension de courant alternatif ;
(c) un compresseur (12) destiné à être entraîné par la section d'onduleur ; et
(d) un moyen de contrôle de vitesse (20) pour contrôler l'une parmi une fréquence de sortie et une tension de sortie de la section d'onduleur de sorte que le compresseur peut être entraîné à une vitesse demandée,

dans lequel le convertisseur comprend en outre un condensateur (10) raccordé en série avec le commutateur bidirectionnel (9), le raccordement en série du condensateur (10) et du commutateur bidirectionnel (9) étant raccordé entre une seconde borne de l'alimentation de courant alternatif pour le circuit de redressement en pont et l'une parmi une borne de sortie de courant continu positive (6c) et une borne de sortie de courant continu négative (6d) du circuit de redressement en pont,
dans lequel
le moyen de génération de signal d'entraînement de commutateur bidirectionnel génère un signal de Marche après un écoulement de temps de $\Delta d$, $0 \leq d$, à partir d'un point zéro où une tension d'une alimentation de courant alternatif devient 0 (zéro) et génère un signal d'Arrêt dans $\Delta t$, $0 \le t$, après avoir généré le signal de Marche, pour contrôler à la fois le composant harmonique d'un courant d'entrée circulant à partir de l'alimentation de courant alternatif et une tension de sortie de courant continu sur le condensateur de lissage,
**caractérisé en ce que** :

l'onduleur pour installation d'air conditionné comprend en outre un moyen de détection de courant d'entrée (16) pour détecter un courant d'entrée ; et

un moyen de mémoire (14a) pour stocker, des combinaisons, à l'avance de $\Delta d$ et $\Delta t$, sensibles au courant d'entrée dans le moyen de génération de signal d'entraînement de commutateur bidirectionnel,

dans lequel une combinaison de $\Delta d$ et $\Delta t$ est sélectionnée par le moyen de mémoire sensible au courant d'entrée en fonction d'un résultat du moyen de détection de courant d'entrée.

2. Onduleur pour installation d'air conditionné selon la revendication 1, comprenant en outre :

un moyen de détection de tension de sortie de convertisseur (17) pour détecter une tension de sortie de courant continu du convertisseur ; et

un moyen de mémoire (14a) pour stocker une tension de sortie cible prédéterminée dans le moyen de génération de signal d'entraînement de commutateur bidirectionnel (14),

dans lequel $\Delta t$ est contrôlé de sorte que lorsque le convertisseur produit une tension inférieure à la tension cible prédéterminée, $\Delta t$ est augmenté, et lorsque le convertisseur produit une tension supérieure à la tension cible prédéterminée, $\Delta t$ est diminué, pour amener la tension de sortie du convertisseur à proximité de la tension cible.

3. Onduleur pour installation d'air conditionné selon la revendication 1, dans lequel la sortie du moyen de détection de courant d'entrée (16) atteint une valeur prédéterminée, une combinaison de $\Delta d$ et $\Delta t$ est sélectionnée de sorte que le courant d'entrée peut être inférieur.

4. Onduleur pour installation d'air conditionné selon la revendication 1, comprenant en outre :

un moyen de détection de nombre de tours par minute de compresseur (18) pour détecter un nombre de tours par minute du compresseur (12) ; et

un moyen de mémoire (14a) pour stocker, à l'avance, des combinaisons de $\Delta d$ et $\Delta t$ sensibles au nombre de tours par minute du compresseur dans le moyen de génération de signal d'entraînement de commutateur bidirectionnel (14),

dans lequel une combinaison de $\Delta d$ et $\Delta t$ est sélectionnée par le moyen de mémoire sensible à un nombre de tours par minute en fonction d'un résultat du moyen de détection du nombre de tours par minute du compresseur.

5. Onduleur pour installation d'air conditionné selon la revendication 1, comprenant en outre :

un moyen de mémoire (14a) pour stocker, à l'avance, des combinaisons de $\Delta d$ et $\Delta t$ sensibles à un nombre de tours par minute demandé du compresseur (12) dans le moyen de génération de signal d'entraînement de commutateur bidirectionnel (14),

dans lequel une combinaison de $\Delta d$ et $\Delta t$ est sélectionnée en fonction du nombre de tours par minute demandé.

6. Onduleur pour installation d'air conditionné selon la revendication 1, comprenant en outre :

un moyen de détection de charge (16) pour détecter une charge appliquée sur le convertisseur ; un moyen de mémoire (14a) pour stocker, à l'avance, une tension de sortie cible sensible à au moins l'un parmi un nombre de tours par minute du compresseur (12), un nombre de tours par minute demandé du compresseur, et un résultat du moyen de détection de charge dans le moyen de génération de signal d'entraînement de commutateur bidirectionnel (14),

dans lequel le moyen de génération de signal d'entraînement de commutateur bidirectionnel est configuré pour fonctionner dans une première région dans laquelle $\Delta t$ est sélectionné de sorte que la tension de sortie de courant continu est amenée à proximité de la tension de sortie cible stockée dans le moyen de mémoire, et le moyen de contrôle de vitesse (20) du compresseur modifie le rapport de conduction dans la section d'onduleur (11) pour contrôler le nombre de tours par minute du compresseur,

dans lequel le moyen de génération de signal d'entraînement de commutateur bidirectionnel est configuré pour fonctionner dans une deuxième région dans laquelle le rapport de conduction est fixe, et le moyen de génération de signal d'entraînement de commutateur bidirectionnel modifie $\Delta t$ en fonction d'un résultat du moyen de détection de nombre de tours par minute de compresseur (18) pour modifier la tension de sortie de courant continu du convertisseur, de sorte que le nombre de tours par minute du compresseur est contrôlé, et

dans lequel le moyen de génération de signal d'entraînement de commutateur bidirectionnel est configuré pour fonctionner dans une troisième région dans laquelle $\Delta t$ et le rapport de conduction dans le moyen de génération de signal d'entraînement de commutateur bidirectionnel est simultanément modifié pour contrôler le nombre de tours par minute du compresseur.

7. Onduleur pour installation d'air conditionné selon la revendication 1, dans lequel le moyen de génération de signal d'entraînement de commutateur bidirectionnel (14) est configuré pour fonctionner dans une première région dans laquelle $\Delta t$ est sélectionné dans une plage de $0 \leq \Delta t \leq t1$, de sorte que la tension de sortie du convertisseur peut être une valeur prédéterminée, le rapport de conduction sur la section d'onduleur (11) est modifié, de sorte qu'un nombre de tours par minute du convertisseur est contrôlé,

dans lequel le moyen de génération de signal d'entraînement de commutateur bidirectionnel est configuré pour fonctionner dans une deuxième région dans laquelle $\Delta t$ est fixé à t1, et le rapport de conduction est modifié, de sorte que le nombre de tours par minute du compresseur (12) est contrôlé.

8. Onduleur pour installation d'air conditionné selon la revendication 1, dans lequel une vitesse de changement d'un rapport de conduction dans le moyen de contrôle de vitesse de compresseur (20) est plus rapide qu'une vitesse de changement de $\Delta t$ dans le moyen de génération de signal d'entraînement de commutateur bidirectionnel (14).

9. Onduleur pour installation d'air conditionné selon la revendication 8, dans lequel au moins l'une parmi la vitesse de changement de $\Delta t$ et la vitesse de changement du rapport de conduction est modifiée en réponse à au moins l'un parmi un nombre de tours par minute du compresseur, un nombre de tours par minute demandé du compresseur et un résultat du moyen de détection de charge (16).

10. Onduleur pour installation d'air conditionné selon la revendication 1 ou les revendications 2 à 9, dans lequel lorsque le courant d'entrée détecté par le moyen de détection de courant d'entrée (16) dépasse une valeur prédéterminée, un état de $\Delta t > 0$ est maintenu, et lorsque le courant d'entrée détecté est inférieur à la valeur prédéterminée, un état de $\Delta t = 0$ est maintenu.

11. Onduleur pour installation d'air conditionné selon la revendication 10, dans lequel la valeur prédéterminée du courant d'entrée diffère du point de vue d'un entraînement de refroidissement et d'un entraînement de chauffage.

12. Onduleur pour installation d'air conditionné selon l'une quelconque des revendications 1 à 3 et 5 à 9, comprenant en outre :

un moyen de détection de nombre de tours par minute de compresseur (18) pour détecter un nombre de tours par minute du compresseur,

dans lequel, lorsque le nombre de tours par minute du compresseur dépasse une valeur prédéterminée, un état de $\Delta t > 0$ est maintenu, et lorsque le nombre de tours par minute est inférieur à la valeur prédéterminée, un état de $\Delta t = 0$ est maintenu.

13. Onduleur pour installation d'air conditionné selon la revendication 4, dans lequel lorsque le nombre de tours par minute détecté par le moyen de détection de nombre de tours par minute de compresseur (18) dépasse une valeur prédéterminée, un état de $\Delta t > 0$ est maintenu, et lorsque le nombre de tours par minute détecté est inférieur à la valeur prédéterminée, un état de $\Delta t = 0$ est maintenu.

14. Onduleur pour installation d'air conditionné selon la revendication 12, dans lequel la valeur prédéterminée du nombre de tours par minute diffère du point de vue d'un entraînement de refroidissement et d'un entraînement de chauffage.

15. Onduleur pour installation d'air conditionné selon la revendication 13, dans lequel la valeur prédéterminée du nombre de tours par minute diffère du point de vue d'un entraînement de refroidissement et d'un entraînement de chauffage.

16. Onduleur pour installation d'air conditionné selon l'une quelconque des revendications 1 à 9, dans lequel alors que le moyen de génération de signal d'entraînement de commutateur bidirectionnel (14) génère un signal d'Arrêt, lorsqu'un nombre de tours par minute demandé du compresseur (12) dépasse une valeur prédéterminée, un état de $\Delta t > 0$ est maintenu, et lorsque le nombre de tours par minute demandé est inférieur à la valeur prédéterminée, un état de $\Delta t = 0$ est maintenu.

**17.** Onduleur pour installation d'air conditionné selon la revendication 16, dans lequel le nombre de tours par minute demandé du compresseur (12) diffère du point de vue d'un entraînement de refroidissement et d'un entraînement de chauffage.

**18.** Onduleur pour installation d'air conditionné selon l'une quelconque des revendications 1 à 10, des revendications 11 à 16 et 17, comprenant en outre :

un moyen de détection de fréquence d'alimentation de courant (13a) pour détecter une fréquence de l'alimentation de courant alternatif (1),
dans lequel $\Delta d$ est sélectionné en réponse à une fréquence de l'alimentation de courant alternatif basée sur un résultat du moyen de détection de fréquence d'alimentation de courant.

# FIG. 1

# FIG. 2

# FIG. 3

# FIG. 4

# FIG. 5

# FIG. 6

## FIG. 7

## FIG. 8

# FIG. 9

Vi:100V/div
IL:5A/div
Vo:100V/div

2ms/div

# FIG. 10

Vi:100V/div
Ic:5A/div
Vc:50V/div

2ms/div

# FIG. 11

Input current

0.5A/div

Order of harmonic

# FIG. 12

DC output voltage

Vo

Light

Load

Heavy

Δt

# FIG. 13

# FIG. 14

# FIG. 15

# FIG. 16

Rpm of compressor

# FIG. 17

# FIG. 18

# FIG. 19

Rpm of compressor

# FIG. 20

## FIG. 21

## FIG. 22

# FIG. 23

Conduction ratio
to inverter section

DC output voltage

Conduction ratio to
inverter section

Rpm of compressor

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001204173 B